# EUROPÄISCHE PATENTSCHRIFT

(11) **EP 3 789 241 B1**
(45) Veröffentlichungstag und Bekanntmachung des Hinweises auf die Patenterteilung: **10.06.2026**
(21) Anmeldenummer: 20189117.3
(22) Anmeldetag: 03.08.2020
(51) Int. Cl.: B60P 1/04, B60P 1/28, B60R 1/00, B60P 1/64

(54) **VORRICHTUNG UND VERFAHREN ZUM DARSTELLEN EINES ENTLADEBEREICHS EINES NUTZFAHRZEUGS**
DEVICE AND METHOD FOR REPRESENTING AN UNLOADING AREA OF A COMMERCIAL VEHICLE
DISPOSITIF ET PROCÉDÉ DE REPRÉSENTATION D'UNE ZONE DE DÉCHARGEMENT D'UN VÉHICULE UTILITAIRE

(30) Priorität: 28.08.2019 DE 102019212893
(43) Veröffentlichungstag der Anmeldung: 10.03.2021
(73) Patentinhaber: Franz Xaver Meiller Fahrzeug- und Maschinenfabrik - GmbH & Co KG, 80997 München (DE)
(72) Erfinder: KIBLER, Florian, 81243 München (DE); DREXLER, Hubert, 82347 Bernried (DE)
(74) Vertreter: Weickmann & Weickmann PartmbB

(56) Entgegenhaltungen:
- EP-A1- 2 801 393
- WO-A1-2018/038654
- US-A1- 2014 375 806
- US-A1- 2017 072 857

## Beschreibung

Die vorliegende Erfindung betrifft eine Vorrichtung zum Darstellen eines Entladebereichs in der Umgebung eines Absetzkippers, Hinterkippers oder Dreiseitenkippers, einen eine derartige Vorrichtung umfassenden Absetzkipper, Hinterkipper oder Dreiseitenkipper und ein Verfahren zum Darstellen eines Entladebereichs in der Umgebung eines Absetzkippers, Hinterkippers oder Dreiseitenkippers.

Eine Ladung transportierende Nutzfahrzeuge, womit gemäß der vorliegenden Erfindung Absetzkipper, die zum Transportieren von Transportbehältern eingerichtet sind, und Hinter- oder auch Dreiseitenkipper bezeichnet sind, die zum Transportieren von Schüttgut eingerichtet sind, stellen bzw. schütten ihre Ladungen bei einem Entladen in ihrer Umgebung ab, d.h. hinter oder neben dem Nutzfahrzeug. Um die tatsächliche Position des Abstellens bzw. Ausschüttens der Ladung einschätzen zu können, sind Bediener solcher Nutzfahrzeuge bisher auf ihre persönliche Einschätzung bzw. Erfahrung hinsichtlich der sich ergebenen Position des Auftreffens oder Aufsetzens der Ladung am Boden angewiesen. Diese Position korrekt einzuschätzen, verlangt somit einen geschulten bzw. erfahrenen Bediener und kann durch Gegebenheiten der Umgebung des Nutzfahrzeugs im Bereich der Absetzposition weiter erschwert sein, wie beispielsweise eine schlechte Sicht auf diese Position und/oder abschüssiges oder in anderer Art unebenes oder unwegsames Gelände. Fehleinschätzungen und sich daraus ergebende Beschädigungen der Ladung oder von Gegenständen in der Umgebung des Nutzfahrzeugs durch falsch auftreffende Ladung können die Folge sein.

Eine Arbeitsmaschine mit Bestimmungsmittel für einen Entladebereich sowie einer ansteuerbaren Anzeigeeinrichtung zum Darstellen dieses Entladebereichs ist beispielsweise aus der WO 2018/038654 A1 bekannt, ferner sei ebenfalls auf die EP 2 801 393 A1 verwiesen, welche ein ähnliches Prinzip in einem anderen Typ von Nutzfahrzeug zeigt, sowie zuletzt auf die US 2017/072857 A1.

Es ist somit die Aufgabe der vorliegenden Erfindung, eine Vorrichtung zum Darstellen eines Entladebereichs in der Umgebung eines Nutzfahrzeug bereitzustellen, durch die ein Bediener über die voraussichtliche Position des Entladens der Ladung in der Umgebung des Nutzfahrzeugs informiert wird, was die Betriebssicherheit des entsprechenden Nutzfahrzeugs erhöht und auch unerfahreneren Bedienern eine korrekte Durchführung des Entladevorgangs ermöglicht.

Hierzu umfasst die erfindungsgemäße Vorrichtung zum Darstellen eines Entladebereichs in der Umgebung eines Nutzfahrzeugs Bestimmungsmittel für den Entladebereich des Nutzfahrzeugs wenigstens auf Grundlage von das Nutzfahrzeug betreffenden Fahrzeugdaten, eine Steuereinheit, welche dazu eingerichtet ist, von den Bestimmungsmitteln die Fahrzeugdaten zu erhalten, und eine durch die Steuereinheit ansteuerbare Anzeigeeinrichtung zum Darstellen des Entladebereichs in räumlicher Beziehung zu dem Nutzfahrzeug auf einer Anzeigefläche.

Indem auf diese Weise dem Bediener der erfindungsgemäßen Vorrichtung durch eine optische Anzeige der bestimmte Entladebereich für die Ladung des Nutzfahrzeugs angezeigt wird, kann dieser auch ohne umfangreiche Erfahrungswerte und der Situation bzw. der Umgebung des Fahrzeugs angemessen den Entladevorgang durchführen oder zu dem Schluss kommen, dass ein Grund bzw. Hindernis vorliegt, das einen korrekten Entladevorgang momentan verhindert, so dass zunächst einmal andere Maßnahmen vor einem Entladevorgang getroffen werden müssen, wie beispielsweise ein Überführen des Nutzfahrzeugs an eine andere Position oder ein Freiräumen des vorhergesagten Entladebereichs.

Hierbei sind verschiedene Typen von Bestimmungsmitteln für den Entladebereich des Nutzfahrzeugs und in diesem Zusammenhang auch unterschiedliche das Nutzfahrzeug betreffende Fahrzeugdaten möglich, anhand derer der Entladebereich bestimmt werden kann. Erfindungsgemäß ist in jedem Fall der Steuereinheit eine Speichereinheit zugeordnet, in welcher Fahrzeugdaten hinterlegt sind, welche von der Steuereinheit erhalten werden können.

Hierbei kann es sich insbesondere um geometrische Fahrzeugdaten handeln, so dass beispielsweise bei einem Absetzkipper mit einer vorbestimmten Bahnkurve des Absetzvorgangs der getragenen Last der Entladebereich derart bestimmt werden kann, dass der Auftreffpunkt der Last entlang der Bahnkurve auf einem ebenen Boden als der Entladebereich bestimmt und dementsprechend durch die Anzeigeeinrichtung angezeigt wird. Somit wirkt in dieser Ausführungsform die Speichereinheit als Bestimmungsmittel, da die Steuereinheit von ihr die entsprechenden Fahrzeugdaten erhalten kann.

Zusätzlich umfassen die Bestimmungsmittel auch wenigstens eine Sensoreinheit, welche dazu eingerichtet ist, Eigenschaften des Nutzfahrzeugs und/oder der Umgebung des Nutzfahrzeugs zu erfassen und der Steuereinheit zur Verfügung zu stellen. Auch hier kann an verschiedene Ausführungsformen derartiger Sensoreinheiten gedacht werden, beispielsweise kann eine Neigung des Fahrzeugs selbst gegenüber der Horizontalen auf abschüssigen Untergründen durch geeignete Sensoren festgestellt werden, die einen Einfluss auf den zu erwartenden Entladebereich haben wird und daher bei der Bestimmung dieses Entladebereichs in Betracht gezogen werden kann. Weiterhein könnten beispielsweise im Fall von Dreiseitenkippern die momentanen Winkel des Kippaufbaus und/oder der schwenkbaren Bordwände von entsprechenden Sensoren erfasst werden, die ebenfalls einen Einfluss auf den zu erwartenden Entladebereich haben und daher bei dessen Bestimmung in Betracht gezogen werden können. Im Falle von Absetzkippern könnte hingegen unter anderem eine Eigenschaft der Last von einer Sensoreinheit erfasst werden, beispielsweise die geometrischen Maße des Transportbehälters, die ebenfalls einen Einfluss darauf haben, an welcher Position ein Absetzvorgang davon enden wird. In sämtlichen der hier angesprochenen Beispielen können an sich bekannte Sensoreinheiten zum Einsatz kommen, beispielsweise Neigungssensoren und/oder Sensoren zum Erfassen eines momentanen Hubs eines Hydraulikelements oder eines Winkels zwischen zwei Komponenten des Nutzfahrzeugs.

Ein Beispiel für die Erfassung von Eigenschaften der Umgebung des Nutzfahrzeugs kann unter anderem ein Erfassen der Beschaffenheit des Untergrunds um das Nutzfahrzeug herum sein, wie beispielsweise eines Gefälles oder eines Ansteigens des Geländes, in dem der Entladebereich erwartet wird. Auch hierzu können an sich bekannte Technologien zum Einsatz kommen, wie beispielsweise Radarsensoren, Ultraschallsensoren oder Stereokameras.

Es zeigt sich hierbei, dass insbesondere eine Kombination von in einer Spei-chereinheit hinterlegten geometrischen Fahrzeugdaten und zusätzlichen Sensorausgaben zu verbesserten Ergebnissen bei der Bestimmung des zu erwartenden Entladebereichs führen kann, da auf Grundlage der geometrischen Eigenschaften des Nutzfahrzeugs zunächst einmal ein vorläufiger erwarteter Entladebereich definiert werden kann, der sich beispielsweise auf einen perfekt ebenen Untergrund und einen vordefinierten Entladeablauf der entsprechenden Komponenten des Nutzfahrzeugs bezieht, und der dann anhand von Sensordaten, die momentane Eigenschaften des Nutzfahrzeugs und/oder der Umgebung betreffen und darstellen, präzisiert bzw. angepasst werden kann.

Auch für die durch die Steuereinheit ansteuerbare Anzeigeeinrichtung sind verschiedene Ausführungsformen denkbar, beispielsweise kann die erfindungsgemäße Vorrichtung ferner wenigstens eine Kamera zum Erfassen der Umgebung des Nutzfahrzeugs umfassen, welche mit der Steuereinrichtung betriebsmäßig gekoppelt ist, wobei die Anzeigeeinrichtung dann einen Bildschirm umfassen kann und die Steuereinheit dazu eingerichtet sein kann, die Anzeigeeinrichtung dazu anzusteuern, das von der Kamera aufgenommene Bild ergänzt um eine Darstellung des Entladebereichs auf dem Bildschirm anzuzeigen.

Dieser Bildschirm kann beispielsweise in einem Führerhaus des Nutzfahrzeugs oder auch an einer anderen Position angeordnet sein, von der aus üblicherweise ein Entladevorgang des Nutzfahrzeugs durch einen Bediener ausgelöst bzw. angefordert wird. Hierbei sind die möglichen Darstellungsformen auf der Anzeigeeinrichtung zunächst einmal frei, es kann beispielsweise daran gedacht werden, in ähnlicher Weise wie bei Einparkhilfen von PKW, auf Grundlage der bekannten Geometrie des Nutzfahrzeugs und der Daten über die Umgebung des Nutzfahrzeugs eine mehr oder weniger abstrakte Ansicht der Szenerie in Vogelperspektive zu erstellen, in der die Umrisse des Nutzfahrzeugs, die Umgebung des Nutzfahrzeugs und der darin befindliche Entladebereich sowie ggf. erfasste Hindernisse oder andere Landschaftsmarken in geeigneter Weise dargestellt sind.

Es versteht sich hierbei, dass der Begriff "Kamera" breit zu verstehen ist und sowohl optische Kameras in sichtbaren Bereich als auch Infrarotkameras oder auch auf einer Radar- oder Ultraschall-Technologie beruhende bildgebende Vorrichtungen umfassen soll, die ferner auch durch die oben bereits angesprochenen Kameras zur Erfassung des Untergrunds gebildet oder betriebsmäßig mit ihnen gekoppelt sein können.

In einer alternativen Ausführungsform, die jedoch selbstverständlich auch gleichzeitig mit der soeben beschriebenen Ausführungsform in einem einzelnen Nutzfahrzeug zum Einsatz kommen kann, kann die Anzeigeeinrichtung der erfindungsgemäßen Vorrichtung eine Beleuchtungseinrichtung umfassen, welche dazu eingerichtet ist, in der Umgebung des Nutzfahrzeugs wenigstens die Umrisse des Entladebereichs zu beleuchten. Auf diese Weise dient nicht mehr ein Bildschirm als Fläche, auf der die Anzeigeeinrichtung den Entladebereich darstellt, sondern dieser wird direkt in die Umgebung des Nutzfahrzeugs an die erwartete Position projiziert. Es versteht sich hierbei, dass der Entladebereich lediglich mit Hilfe seiner Umrisse oder durch eine gefüllte Fläche dargestellt werden kann, wobei beispielsweise im Fall eines Abladens von Schüttgut ebenfalls ein Verlauf oder Gradient in der Darstellung des Entladebereichs enthalten sein kann, beispielsweise eine lichtstarke Markierung, wo das unmittelbare Auftreffen von Schüttgut erwartet wird und eine zunehmend weniger lichtstarke Markierung in Bereichen, von denen erwartet wird, dass das Schüttguts sich verteilen wird.

Ebenfalls versteht es sich, dass eine derartige Beleuchtungseinrichtung auch mit einer Kamera in einer derartigen Weise kombinierbar ist, dass der erwartete Entladebereich zwar in die Umgebung des Nutzfahrzeugs projiziert wird, dieser allerdings nicht direkt optisch von dem Bediener des Nutzfahrzeugs erfasst werden muss, sondern die Umgebung mit dem dahinein projizierten erwarteten Entladebereich zusammen von der Kamera aufgenommen und an einem Bildschirm dargestellt werden kann. Auf diese Weise kann an dem Bildschirm ein ähnlicher optischer Eindruck erzeugt werden, wie in dem oben zuerst beschriebenen Ausführungsbeispiel, jedoch wird der Entladebereich nicht virtuell nach den Prinzipien der Augmented Reality in ein aufgenommenes Kamerabild integriert, sondern das aufgenommene Kamerabild enthält direkt die Projektion des Entladebereichs in die Umgebung des Nutzfahrzeugs.

Wenngleich die angesprochenen Kameras und Beleuchtungseinrichtungen prinzipiell an jeder geeigneten Position an dem Nutzfahrzeug vorgesehen sein können, so bietet es sich doch an, wenigstens eines der beiden einem Fahrzeugrahmen, einer Bordwand oder einem Auslegerarm des Nutzfahrzeugs zuzuordnen.

Gemäß einem zweiten Aspekt betrifft die vorliegende Erfindung ein Nutzfahrzeug, umfassend eine erfindungsgemäße Vorrichtung zum Darstellen eines Entladebereichs in der Umgebung des Nutzfahrzeugs, insbesondere ein Nutzfahrzeug zum Transport von Schüttgut, wie beispielsweise einen Hinterkipper oder Dreiseitenkipper, oder ein zum Transport von Transportbehältern eingerichtetes Nutzfahrzeug, wie beispielsweise einen Absetzkipper.

Gemäß einem weiteren Aspekt betrifft die vorliegende Erfindung ein Verfahren zum Darstellen eines Entladebereichs in der Umgebung eines Nutzfahrzeugs, insbesondere mittels einer erfindungsgemäßen Vorrichtung, umfassend ein Bestimmen des Entladebereichs für eine Ladung des Nutzfahrzeugs wenigstens auf Grundlage von das Nutzfahrzeug betreffenden Fahrzeugdaten und ein Darstellen des Entladebereichs in räumlicher Beziehung zu dem Nutzfahrzeug auf einer Anzeigefläche durch eine Anzeigeeinrichtung.

Hierbei kann das Bestimmen der das Nutzfahrzeug betreffenden Fahrzeugdaten ein Erfassen von wenigstens einer Eigenschaft des Nutzfahrzeugs durch eine Sensoreinheit umfassen, beispielsweise eines momentanen Öffnungswinkels einer Bordwand oder einer Stellung eines Auslegerarms des Nutzfahrzeugs.

Zuletzt kann in dem erfindungsgemäßen Verfahren das Bestimmen der das Nutzfahrzeug betreffenden Fahrzeugdaten eine Eingabe oder ein Erfassen von Daten bezüglich der Beschaffenheit der Ladung des Nutzfahrzeugs umfassen. Hierbei kann beispielsweise daran gedacht werden, die Art von transportiertem Schüttgut manuell mittels geeigneter Eingabemittel an eine Steuereinheit einzugeben, die dann das erwartete Rieselverhalten des Schüttguts bei einem Entladevorgang in die Bestimmung des Entladebereichs einbeziehen kann, oder es können Eingaben oder Bestimmungen über die geometrischen Ausmaße oder Eigenschaften von durch das Nutzfahrzeug transportierten Transportbehälter bei der Bestimmung des erwarteten Entladebereichs hinzugezogen werden.

Weitere Vorteile und Merkmale der vorliegenden Erfindung werden aus der nachfolgenden Beschreibung von Ausführungsformen davon deutlich, wenn diese zusammen mit den beiliegenden Figuren betrachtet wird. Diese zeigen im Einzelnen:
- Figur 1: ein erfindungsgemäßes Nutzfahrzeug in Form eines Absetzkippers in einer schematischen Seitenansicht;
- Figur 2: eine Ausführungsform eines erfindungsgemäßen Nutzfahrzeugs in Form eines Hinterkippers in einer schematischen Seitenansicht;
- Figur 3: eine schematische Darstellung der Komponenten einer erfindungsgemäßen Vorrichtung zum Darstellen eines Entladebereichs; und
- Figur 4: eine beispielhafte Darstellung eines Bildschirms einer Anzeigeeinrichtung der Vorrichtung aus Figur 3 während ihres Betriebs.

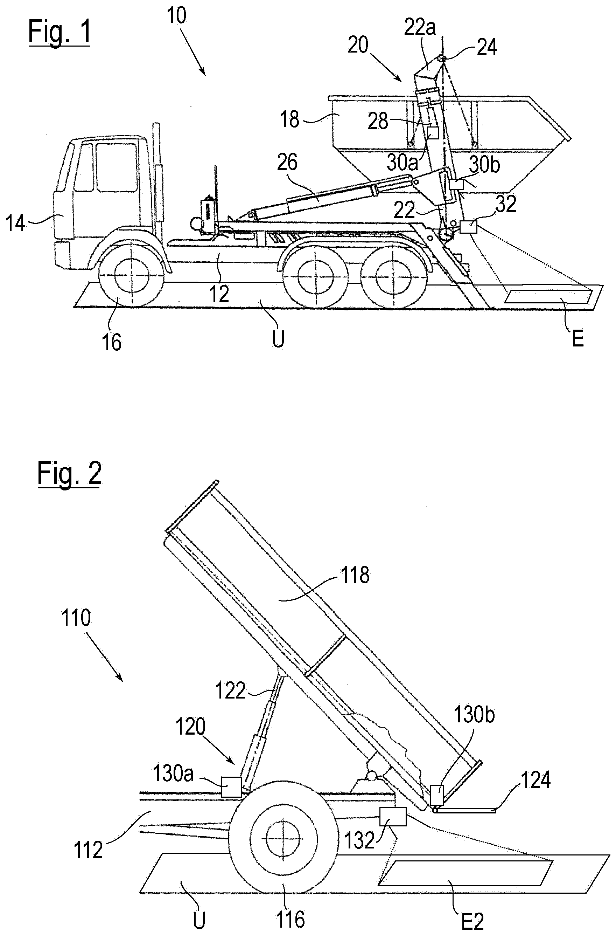

In Figur 1 ist zunächst einmal ein erfindungsgemäßes Nutzfahrzeug in einer Ausführungsform als ein Absetzkipper gezeigt und ganz allgemein mit dem Bezugszeichen 10 bezeichnet. Dieser Absetzkipper 10 umfasst bekannte Elemente wie einen Fahrzeugkörper 12, eine Fahrerkabine 14 und Räder 16, mit denen er auf einem Untergrund U aufsteht. Ferner umfasst es einen Wechselbehälter 18, der im gezeigten Beispiel zur Aufnahme von Schüttgut vorgesehen ist.

Der Wechselbehälter 18 ist durch eine mit einem Bezugszeichen 20 bezeichnete Handhabungsvorrichtung auf das Nutzfahrzeug aufnehmbar und von diesem absetzbar, die einen schwenkbaren Arm 22 mit einem ausfahrbaren oberen Teil 22a und einem daran vorgesehenen Aufhängungspunkt 24 umfasst.

Die Betätigung der Handhabungsvorrichtung 20 erfolgt über einen Hydraulikzylinder 26, der zwischen dem Arm 22 der Handhabungsvorrichtung 20 und dem Fahrzeugkörper 12 angeordnet ist. Ferner ist dem Arm 22 ein weiterer Hydraulikzylinder 28 zugeordnet, der die Ausfahrbewegung des ausfahrbaren Teils 22a des Arms 22 antreibt.

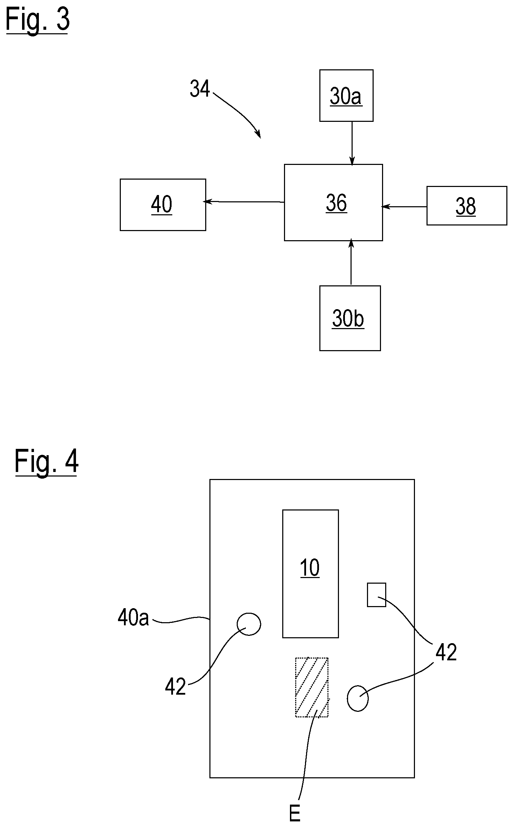

Zum Entladen des Wechselbehälters 18 von dem Absetzkipper 10 wird der Hydraulikzylinder 26 ausgefahren, so dass der schwenkbare Arm 22 eine Schwenkbewegung um seine Schwenkachse durchläuft, bis der Wechselbehälter 18 mit dem Untergrund U in einem angedeuteten Entladebereich E in flächigen Kontakt kommt. Die genaue Position dieses Entladebereichs E ist von verschiedenen Faktoren abhängig, wie beispielsweise dem Ausfahrhub des ausfahrbaren Oberteils 22a des Schwenkarms 22 und einem möglichen Gefälle oder einer Steigung des Untergrunds U in diesem Bereich. Wenngleich in der unten beschriebenen und in Figur 3 dargestellten Steuereinheit 36 und insbesondere einer dieser zugeordneten Speichereinheit 38 wesentliche geometrische Daten des Absetzkippers 10 hinterlegt sein können, mittels derer zunächst einmal durch die Steuereinheit 36 ein vorläufiger erwarteter Entladebereich bestimmt werden kann, so können zusätzlich Sensoreinheiten an dem Absetzkipper 10 vorgesehen sein, wie beispielsweise ein erster Sensor 30a, welcher den Ausfahrhub des Oberteils 22a des schwenkbaren Arms 22 bestimmt, sowie eine Kamera 30b, mit Hilfe von welcher die Beschaffenheit und ggf. ein Gefälle und/oder eine Steigung des Untergrunds U oder das Vorliegen von Hindernissen bestimmt werden, beispielsweise durch geeignete, von der Steuereinheit ausgeführte Algorithmen zur Mustererkennung und/oder Bildverarbeitung. Hierbei sind in den Figuren die Sensorein-heiten rein schematisch dargestellt und es kann auf an sich bekannte Sensortypen zurückgegriffen werden, wobei es sich versteht, dass auch eine Mehrzahl von einzelnen Sensoren eine Sensoreinheit bilden können, beispielsweise eine Mehrzahl von Radarsensoren, die wie aus dem Automobilbau bekannt die Umgebung des Nutzfahrzeugs nach Hindernissen abtasten und eine gemeinsame oder koordinierte Ausgabe liefern.

Anhand der bekannten geometrischen Daten und der durch die Sensorein-heiten 30a und 30b erfassten Eigenschaften des Nutzfahrzeugs und seiner Umgebung kann eine verbesserte Bestimmung des erwarteten Entladebereichs E des Wechselbehälters 18 durchgeführt werden, wobei der derart bestimmte Entladebereich E nun mittels einer durch die Steuereinheit 36 steuerbare Anzeigeeinrichtung 40 in räumlicher Beziehung zu dem Nutzfahrzeug dargestellt werden kann.

Eine mögliche Ausführungsform einer derartigen Anzeigeeinrichtung 40 besteht in einer an dem schwenkbaren Arm 22 vorgesehenen Beleuchtungseinheit 32, welche ebenfalls lediglich rein schematisch angedeutet und dazu eingerichtet ist, den bestimmten Entladebereich E hinter dem Absetzkipper 10 wenigstens im Bereich seiner Umrisse zu beleuchten. Somit wirkt in diesem Beispiel der Untergrund U als Anzeigefläche im Sinne der vorliegenden Erfindung.

Alternativ oder zusätzlich könnte beispielsweise im Führerhaus 14 des Absetzkippers 10 ein Bildschirm bereitgestellt sein, wie er weiter unten im Zusammenhang mit Figur 4 beschrieben werden wird und auf dem nach den Prinzipien der Augmented Reality die beispielsweise von der Kamera 30b erfasste Umgebung des Nutzfahrzeugs 10 ergänzt um eine Darstellung des Wechselbehälters 18 dargestellt wird.

Beide möglichen Darstellungsarten des Entladebereichs E, sowohl direkt in der Umgebung des Nutzfahrzeugs 10, als auch auf einem Bildschirm, ermöglichen es einem Bediener des Nutzfahrzeugs 10, auch ohne auf Erfahrungswerte zurückgreifen zu müssen und ohne die Gefahr, durch Fehleinschätzungen Komponenten des Nutzfahrzeugs 10 oder Gegenstände in der Umgebung des Nutzfahrzeugs 10 zu beschädigen, einen Entladevorgang in sicherer Weise vorzunehmen.

In ähnlicher Weise zeigt die Figur 2 eine zweite Ausführungsform 110 eines erfindungsgemäßen Nutzfahrzeugs, das als Hinterkipper ausgebildet ist und mit dem Bezugszeichen 110 bezeichnet ist. Dieser Hinterkipper 110 umfasst ebenfalls einen Fahrzeugrahmen 112 sowie ein nicht dargestelltes Führerhaus und Räder 116 sowie einen Ladebereich 118, auf welchem das Nutzfahrzeug 110 Schüttgut transportieren kann. Die Handhabungsvorrichtung 120 zum Entladen des Hinterkippers 110 umfasst in ähnlicher Weise wie bei dem Absetzkipper 10 einen Hydraulikzylinder 122, wobei in diesem Fall der gesamte Ladebereich 118 um eine Schwenkachse schwenkbar ist. Am hinteren Ende des Ladebereichs 118 ist ferner eine durch ein nicht dargestellte Stellvorrichtung schwenkbare Bordwand 124 vorgesehen, über die das auf dem Ladebereich 118 transportierte Schüttgut bei einem Entladevorgang des Hinterkippers 110 in einen Entladebereich E2 abrollen wird.

Dieser Entladebereich E2 kann ebenfalls mit Hilfe von durch eine Steuereinheit zur Verfügung gestellten Daten hinsichtlich der Geometrie des Hinterkippers 110 bestimmt werden und anhand der von zwei Sensoreinheiten 130a und 130b gelieferten Daten präzisiert oder angepasst werden, wobei die erste Sensoreinheit 130a dem Hydraulikzylinder 122 der Handhabungsvorrichtung 120 zugeordnet ist und dessen momentanen Ausfahrhub bestimmt, während die zweite Sensoreinheit 130b der schwenkbaren Bordwand 124 zugeordnet ist und ihren momentanen Winkel gegenüber der Auflagefläche des Ladebereichs 118 bestimmt.

Zuletzt ist erneut eine als Anzeigevorrichtung dienende Beleuchtungseinheit 132 vorgesehen, welche mit der Steuereinheit gekoppelt und dazu eingerichtet ist, den als Anzeigefläche wirkenden Untergrund U im Bereich des Entladebereichs E2 zu belechten, wobei ferner weitere Parameter einbezogen werden können, wie beispielsweise die Beschaffenheit des auf dem Ladebereich 118 aufgenommen Schüttguts, die einen Einfluss darauf haben wird, ob der Entladebereich E2 räumlich eher eng begrenzt oder eher weitläufig sein wird, beispielsweise bei einem gut rieselfähigen Material wie Sand oder Kies.

In Figur 3 ist nun schematisch eine Ausführungsform einer Vorrichtung 34 zum Darstellen eines Entladebereichs in der Umgebung eines Nutzfahrzeugs gezeigt, wie sie sowohl in dem Absetzkipper 10 aus Figur 1 als auch dem Hinterkipper 110 aus Figur 2 zum Einsatz kommen kann, wobei im Folgenden aus Gründen der Lesbarkeit lediglich auf die Ausführungsform des Absetzkippers aus Figur 1 abgestellt wird.

Die Vorrichtung 34 umfasst zunächst eine Steuereinheit 36, welche durch eine ohnehin in dem entsprechenden Nutzfahrzeug 10 vorgesehene zentrale Steuereinheit gebildet oder betriebsmäßig zum Datenaustausch mit dieser gekoppelt sein kann. Der Steuereinheit 36 ist wiederum eine Speichereinheit 38 zugeordnet, in welcher geometrische Daten des entsprechenden Nutzfahrzeugs und gegebenenfalls weitere Kennfelder oder Parametrisierungen hinterlegt sind, die zur Bestimmung eines Entladebereichs des Nutzfahrzeugs dienen können. In diesem Sinne wirkt die Speichereinheit 38 ebenso wie die bereits angesprochene Sensoreinheit 30a und die Kamera 30b als Bestimmungsmittel im Sinne der vorliegenden Anmeldung.

Die Steuereinheit erhält von sämtlichen der Komponenten Speichereinheit 38, Sensoreinheit 30a und Kamera 30b Daten, aus denen sie mithilfe geeigneter Algorithmen den Entladebereich E in der Umgebung des Nutzfahrzeugs 10 ermittelt und entsprechende Daten an eine Anzeigeeinrichtung 40 ausgibt. Diese Anzeigeeinrichtung 40 kann beispielsweise durch die Beleuchtungseinrichtung 32 aus Figur 1 gebildet sein oder auch einen Bildschirm 40a umfassen, der im Führerhaus 14 des Absetzkippers 10 angeordnet ist und der in Figur 4 in einem Betriebszustand schematisch dargestellt ist.

Figur 4 zeigt nämlich den genannten, als Anzeigefläche im Sinne der vorliegenden Erfindung wirkenden Bildschirm 40a, in dem das Nutzfahrzeug 10 schematisch mit seiner Umgebung in einer Draufsicht gezeigt ist, die von der Steuereinheit auf Grundlage der ihr zur Verfügung stehenden Daten erzeugt worden ist. Hinter dem Nutzfahrzeug 10 ist in dieser Darstellung der ermittelte Entladebereich E angezeigt, d.h. der Bereich, in dem der Wechselbehälter 18 bei einem Entladevorgang des Abstellkippers 10 abgesetzt werden würde. Ferner sind auch noch einige Hindernisse 42 auf dem Bildschirm 40a angedeutet, die von der Steuereinheit 36 anhand einer Bildanalyse der von der Kamera 30b gelieferten Bilder erkannt worden sind.

## Patentansprüche

1. Vorrichtung (34) zum Darstellen eines Entladebereichs (E; E2) in der Umgebung eines Absetzkippers, Hinterkippers oder Dreiseitenkippers (10; 110), umfassend:
- Bestimmungsmittel (30a, 30b, 38; 130a, 130b) für den Entladebereich (E; E2) des Absetzkippers, Hinterkippers oder Dreiseitenkippers (10; 110) wenigstens auf Grundlage von den Absetzkipper, Hinterkipper oder Dreiseitenkipper (10; 110) betreffenden Fahrzeugdaten;
- eine Steuereinheit (36), welche dazu eingerichtet ist, von den Bestimmungsmitteln (30a, 30b, 38; 130a, 130b) die Fahrzeugdaten zu erhalten; und
- eine durch die Steuereinheit (36) ansteuerbare Anzeigeeinrichtung (32, 40; 132) zum Darstellen des Entladebereichs (E; E2) in räumlicher Beziehung zu dem Absetzkipper, Hinterkipper oder Dreiseitenkipper auf einer Anzeigefläche (40a, U),
wobei der Steuereinheit (36) eine Speichereinheit (38) zugeordnet ist, in welcher Fahrzeugdaten hinterlegt sind, welche von der Steuereinheit (36) erhalten werden können, wodurch die Speichereinheit (38) als Bestimmungsmittel wirkt, und
die Bestimmungsmittel ferner wenigstens eine Sensoreinheit (30a, 30b; 130a, 130b) umfassen, welche dazu eingerichtet ist, Eigenschaften des Absetzkippers, Hinterkippers oder Dreiseitenkippers (10; 110) und/oder der Umgebung zu erfassen und der Steuereinheit (36) zur Verfügung zu stellen.

2. Vorrichtung (34) nach Anspruch 1, ferner umfassend wenigstens eine Kamera (30b) zum Erfassen der Umgebung des Absetzkippers, Hinterkippers oder Dreiseitenkippers (10), welche mit der Steuereinheit (36) betriebsmäßig gekoppelt ist, wobei die Anzeigeeinrichtung (40) einen Bildschirm (40a) umfasst und die Steuereinheit (36) dazu eingerichtet ist, die Anzeigeeinrichtung (40) dazu anzusteuern, das von der Kamera (30b) aufgenommene Bild ergänzt um eine Darstellung des Entladebereichs (E) auf dem Bildschirm (40a) anzuzeigen.

3. Vorrichtung (34) nach einem der Ansprüche 1 bis 2, wobei die Anzeigeeinrichtung (40) eine Beleuchtungseinrichtung (32; 132) umfasst, welche dazu eingerichtet ist, in der Umgebung des Absetzkippers, Hinterkippers oder Dreiseitenkippers (10; 110) wenigstens die Umrisse des Entladebereichs (E; E2) zu beleuchten.

4. Vorrichtung (34) nach einem der Ansprüche 1 bis 3, wobei wenigstens eines aus der Kamera (30b) und der Beleuchtungseinrichtung (32; 132) einem Fahrzeugrahmen (12; 112), einer Bordwand (124) oder einem Auslegerarm (22) des Absetzkippers, Hinterkippers oder Dreiseitenkippers (10; 110) zugeordnet ist.

5. Absetzkipper, Hinterkipper oder Dreiseitenkipper (10; 110), umfassend eine Vorrichtung (34) nach einem der Ansprüche 1 bis 4, insbesondere zum Transport von Schüttgut oder von Transportbehältern eingerichteter Absetzkipper, Hinterkipper oder Dreiseitenkipper (10; 110).

6. Verfahren zum Darstellen eines Entladebereichs (E; E2) in der Umgebung eines Absetzkippers, Hinterkippers oder Dreiseitenkippers (10; 110), durch eine Vorrichtung (34) nach einem der Ansprüche 1 bis 4, umfassend:
- Bestimmen des Entladebereichs (E; E2) für eine Ladung des Absetzkippers, Hinterkippers oder Dreiseitenkippers (10; 110) wenigstens auf Grundlage von den Absetzkipper, Hinterkipper oder Dreiseitenkipper (10; 110) betreffenden Fahrzeugdaten; und
- Darstellen des Entladebereichs (E; E2) in räumlicher Beziehung zu dem Absetzkipper, Hinterkipper oder Dreiseitenkipper (10; 110) auf einer Anzeigefläche (40a; U) durch eine Anzeigeeinrichtung (40).

7. Verfahren nach Anspruch 6, wobei ferner das Bestimmen der den Absetzkipper, Hinterkipper oder Dreiseitenkipper (10; 110) betreffenden Fahrzeugdaten ein Erfassen von wenigstens einer Eigenschaft des Absetzkippers, Hinterkippers oder Dreiseitenkippers (10; 110), beispielsweise eines momentanen Öffnungswinkels einer Bordwand (124) oder einer Stellung eines Auslegerarms (22) des Absetzkippers, Hinterkippers oder Dreiseitenkippers (10; 110), durch eine Sensoreinheit (30a; 130a, 130b) umfasst.

8. Verfahren nach Anspruch 6 oder 7, wobei das Bestimmen der den Absetzkipper, Hinterkipper oder Dreiseitenkipper (10; 110) betreffenden Fahrzeugdaten eine Eingabe oder ein Erfassen von Daten bezüglich der Beschaffenheit der Ladung des Absetzkippers, Hinterkippers oder Dreiseitenkippers (10; 110) umfasst.

## Claims

1. Device (34) for displaying an unloading area (E; E2) in the surroundings of a skip loader, rear tipper, or three-way tipper (10; 110), comprising:
- determining means (30a, 30b, 38; 130a, 130b) for determining the unloading area (E; E2) of the skip loader, rear tipper, or three-way tipper (10; 110) at least on the basis of the vehicle data relating to the skip loader, rear tipper, or three-way tipper (10; 110);
- a control unit (36) which is designed to obtain the vehicle data from the determining means (30a, 30b, 38; 130a, 130b); and
- a display device (32, 40; 132) that can be controlled by the control unit (36) for displaying the unloading area (E; E2) in spatial relationship to the skip loader, rear tipper, or three-way tipper on a display surface (40a, U),
wherein the control unit (36) is associated with a storage unit (38) in which vehicle data is stored, which can be retrieved by the control unit (36), whereby the storage unit (38) acts as a determining means, and
the determining means further comprise at least one sensor unit (30a, 30b; 130a, 130b) which is designed to detect properties of the skip loader, rear tipper, or three-way tipper (10; 110) and/or the surroundings and make said properties available to the control unit (36).

2. Device (34) according to claim 1, further comprising at least one camera (30b) for capturing the surroundings of the skip loader, rear tipper, or three-way tipper (10), which is operationally coupled to the control unit (36), wherein the display device (40) comprises a screen (40a) and the control unit (36) is designed to control the display device (40) so as to display the image captured by the camera (30b), supplemented by a representation of the unloading area (E), on the screen (40a).

3. Device (34) according to any one of claims 1 to 2, wherein the display device (40) comprises a lighting device (32; 132) that is designed to illuminate at least the outlines of the unloading area (E; E2) in the surroundings of the skip loader, rear tipper, or three-way tipper (10; 110).

4. Device (34) according to any one of claims 1 to 3, wherein at least one of the following: the camera (30b) and the lighting device (32; 132) is associated with a vehicle frame (12; 112), a side panel (124), or a cantilever arm (22) of the skip loader, rear tipper, or three-way tipper (10; 110).

5. Skip loader, rear tipper or three-way tipper (10; 110), comprising a device (34) according to one of claims 1 to 4, in particular a skip loader, rear tipper or three-way tipper (10; 110) for transporting bulk material or transport containers.

6. Method for displaying an unloading area (E; E2) in the surroundings of a skip loader, rear tipper, or three-way tipper (10; 110) by means of a device (34) according to any one of claims 1 to 4, comprising:
- determining the unloading area (E; E2) for a load of the skip loader, rear tipper, or three-way tipper (10; 110) at least on the basis of vehicle data relating to the skip loader, rear tipper, or three-way tipper (10; 110); and
- displaying the unloading area (E; E2) in spatial relationship to the skip loader, rear tipper, or three-way tipper (10; 110) on a display surface (40a; U) by a display device (40).

7. Method according to claim 6, wherein the determination of the vehicle data relating to the skip loader, rear tipper, or three-way tipper (10; 110) comprises detecting at least one property of the skip loader, rear tipper, or three-way tipper (10; 110), for example, a momentary opening angle of a side panel (124) or a position of a cantilever arm (22) of the skip loader, rear tipper, or three-way tipper (10; 110), by means of a sensor unit (30a; 130a, 130b).

8. Method according to claim 6 or 7, wherein the determination of the vehicle data relating to the skip loader, rear tipper or three-way tipper (10; 110) comprises inputting or acquiring data relating to the nature of the load of the skip loader, rear tipper or three-way tipper (10; 110).

## Revendications

1. Dispositif (34) destiné à représenter une zone de déchargement (E ; E2) aux alentours d'un véhicule multi-benne, d'un véhicule benne arrière ou d'un véhicule tribenne (10 ; 110), comprenant :
- des moyens de détermination (30a, 30b, 38 ; 130a, 130b) de la zone de déchargement (E ; E2) du véhicule multi-benne, du véhicule benne arrière ou du véhicule tribenne (10 ; 110) au moins sur la base de données de véhicule concernant le véhicule multi-benne, le véhicule benne arrière ou le véhicule tribenne (10 ; 110) ;
- une unité de commande (36) conçue pour recevoir les données de véhicule provenant des moyens de détermination (30a, 30b, 38 ; 130a, 130b) ; et
- un dispositif d'affichage (32, 40 ; 132) apte à être commandé par l'unité de commande (36) et destiné à représenter sur une surface d'affichage (40a, U) la zone de déchargement (E ; E2) en relation spatiale avec le véhicule multi-benne, le véhicule benne arrière ou le véhicule tribenne,
dans lequel
une unité de mémoire (38) est associée à l'unité de commande (36), dans laquelle sont stockées des données de véhicule qui peuvent être reçues par l'unité de commande (36), moyennant quoi l'unité de mémoire (38) fait office de moyen de détermination, et
les moyens de détermination comprennent en outre au moins une unité de détection (30a, 30b ; 130a, 130b) qui est conçue pour détecter les caractéristiques du véhicule multi-benne, du véhicule benne arrière ou du véhicule tribenne (10 ; 110) et/ou des alentours et pour les mettre à la disposition de l'unité de commande (36).

2. Dispositif (34) selon la revendication 1,
comprenant en outre au moins une caméra (30b) destinée à détecter les alentours du véhicule multi-benne, du véhicule benne arrière ou du véhicule tribenne (10), laquelle est couplée de manière fonctionnelle à l'unité de commande (36), le dispositif d'affichage (40) comprenant un écran d'affichage (40a), et l'unité de commande (36) étant conçue pour commander le dispositif d'affichage (40) de manière à afficher sur l'écran d'affichage (40a) l'image enregistrée par la caméra (30b), complétée par une représentation de la zone de déchargement (E).

3. Dispositif (34) selon l'une des revendications 1 à 2,
dans lequel le dispositif d'affichage (40) comprend un dispositif d'éclairage (32 ; 132) conçu pour éclairer, aux alentours du véhicule multi-benne, du véhicule benne arrière ou du véhicule tribenne (10 ; 110), au moins les contours de la zone de déchargement (E ; E2).

4. Dispositif (34) selon l'une des revendications 1 à 3,
dans lequel au moins l'un parmi la caméra (30b) et le dispositif d'éclairage (32 ; 132) est associé à un châssis de véhicule (12 ; 112), à une ridelle (124) ou à un bras articulé (22) du véhicule multi-benne, du véhicule benne arrière ou du véhicule tribenne (10 ; 110).

5. Véhicule multi-benne, véhicule benne arrière ou véhicule tribenne (10 ; 110), comprenant un dispositif (34) selon l'une des revendications 1 à 4, en particulier véhicule multi-benne, véhicule benne arrière ou véhicule tribenne (10 ; 110) destiné à transporter des produits en vrac ou des conteneurs de transport.

6. Procédé pour représenter une zone de déchargement (E ; E2) aux alentours d'un véhicule multi-benne, d'un véhicule benne arrière ou d'un véhicule tribenne (10 ; 110), à l'aide d'un dispositif (34) selon l'une des revendications 1 à 4, consistant à :
- déterminer la zone de déchargement (E ; E2) pour un chargement du véhicule multi-benne, du véhicule benne arrière ou du véhicule tribenne (10 ; 110) au moins sur la base de données de véhicule concernant le véhicule multi-benne, le véhicule benne arrière ou le véhicule tribenne (10 ; 110) ; et
- représenter sur une surface d'affichage (40a ; U) la zone de déchargement (E ; E2) en relation spatiale avec le véhicule multi-benne, le véhicule benne arrière ou le véhicule tribenne (10 ; 110), à l'aide d'un dispositif d'affichage (40).

7. Procédé selon la revendication 6,
dans lequel la détermination des données de véhicule concernant le véhicule multi-benne, le véhicule benne arrière ou le véhicule tribenne (10 ; 110) comprend en outre la détection d'au moins une caractéristique du véhicule multi-benne, du véhicule benne arrière ou du véhicule tribenne (10 ; 110), par exemple un angle d'ouverture instantané d'une ridelle (124) ou une position d'un bras articulé (22) du véhicule multi-benne, du véhicule benne arrière ou du véhicule tribenne (10 ; 110), à l'aide d'une unité de détection (30a ; 130a, 130b).

8. Procédé selon la revendication 6 ou 7,
dans lequel la détermination des données de véhicule concernant le véhicule multi-benne, le véhicule benne arrière ou le véhicule tribenne (10 ; 110) comprend la saisie ou l'acquisition de données relatives à la nature du chargement du véhicule multi-benne, du véhicule benne arrière ou du véhicule tribenne (10 ; 110).
